(19) Europäisches Patentamt / European Patent Office / Office européen des brevets

(11) **EP 3 482 067 B1**

(12) **EUROPEAN PATENT SPECIFICATION**

(45) Date of publication and mention of the grant of the patent:
**26.08.2020 Bulletin 2020/35**

(21) Application number: **17739870.8**

(22) Date of filing: **06.07.2017**

(51) Int Cl.:
*F03D 7/02* *(2006.01)*　　*F03D 7/04* *(2006.01)*

(86) International application number:
**PCT/EP2017/000800**

(87) International publication number:
**WO 2018/007012 (11.01.2018 Gazette 2018/02)**

(54) **CONTROL SYSTEM, WIND TURBINE AND CONTROL METHOD**

STEUERUNGSSYSTEM, WINDTURBINE UND STEUERUNGSVERFAHREN

SYSTÈME DE COMMANDE, EOLIENNE ET PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2016 DE 102016212364**

(43) Date of publication of application:
**15.05.2019 Bulletin 2019/20**

(73) Proprietor: **Universität Stuttgart**
**70174 Stuttgart (DE)**

(72) Inventors:
• **RAACH, Steffen**
**70193 Stuttgart (DE)**
• **FÜRST, Holger**
**71063 Sindelfingen (DE)**
• **HAIZMANN, Florian**
**70597 Stuttgart (DE)**
• **SCHLIPF, David**
**70569 Stuttgart (DE)**

(74) Representative: **Müller-Boré & Partner**
**Patentanwälte PartG mbB**
**Friedenheimer Brücke 21**
**80639 München (DE)**

(56) References cited:
**EP-A1- 2 757 255**　　**EP-A2- 2 767 710**
**WO-A1-2015/124946**

• **P.M.O. GEBRAAD ET AL: "Wind turbine wake estimation and control using FLORIDyn, a control-oriented dynamic wind plant model", 2015 AMERICAN CONTROL CONFERENCE (ACC), 1 July 2015 (2015-07-01), pages 1702-1708, XP055413503, DOI: 10.1109/ACC.2015.7170978 ISBN: 978-1-4799-8684-2**

**Description**

In future, a wind turbine will not only be seen as a single systems operating independently, but also as a component of a larger interacting system, the wind farm. To increase the efficiency of a wind farm, two main concepts have been proposed: axial induction control and wake redirecting. This contribution focuses on the latter. Remote sensing technologies in wind energy applications have opened new ways to control wind turbines. In this contribution, a further step is taken by using a remote sensing device for redirecting the wake of a wind turbine. A controller is proposed which uses the yaw actuator of a wind turbine to steer the wake center of the turbine to a desired position. The wake propagation from the wind turbine to the measurement location is modeled with a time delay. This forms a challenging problem for controller design. The controller follows the idea of the internal model principle and uses a model to predict the system behavior avoiding an overestimation of the error. Further, an adaptive filter is proposed in order to filter uncontrollable frequencies from the wake center estimation. The estimation from lidar measurement data is assumed to be perfect. Closed-loop simulations are conducted using the nominal system and a wind farm simulation tool, which was adapted to the scenario. The results are compared to the uncontrolled baseline case and a statically applied yaw offset. They show an increase in the total power output of the wind farm. Together with wake tracking methods, the approach can be considered as a promising step towards closed-loop wind farm control.

Lidar is a surveying technology known to the skilled person that measures distance by illuminating a target with a laser light. Lidar is an acronym of Light Detection And Ranging, and was originally created as a portmanteau of "light" and "radar". Lidar is popularly used as a technology to make high-resolution maps, with applications in geodesy, geomatics, archaeology, geography, geology, geomorphology, seismology, forestry, atmospheric physics, airborne laser swath mapping (ALSM) and laser altimetry. What is known as Lidar is sometimes simply referred to as laser scanning or 3D scanning, with terrestrial, airborne and mobile applications.

Lidar uses ultraviolet, visible, or near infrared light to image objects. It can target a wide range of materials, including non-metallic objects, rocks, rain, chemical compounds, aerosols, clouds and even single molecules. A narrow laser-beam can map physical features with very high resolutions; for example, an aircraft can map terrain at 30 cm resolution or better.

Lidar has been used extensively for atmospheric research and meteorology. Lidar instruments fitted to aircraft and satellites carry out surveying and mapping - a recent example being the U.S. Geological Survey Experimental Advanced Airborne Research Lidar. NASA has identified lidar as a key technology for enabling autonomous precision safe landing of future robotic and crewed lunar-landing vehicles.

Wavelengths vary to suit the target: from about 10 micrometers to the UV (approximately 250 nm). Typically light is reflected via backscattering. Different types of scattering are used for different lidar applications: most commonly Rayleigh scattering, Mie scattering, Raman scattering, and fluorescence. Based on different kinds of backscattering, the lidar can be accordingly called Rayleigh Lidar, Mie Lidar, Raman Lidar, Na/Fe/K Fluorescence Lidar, and so on. Suitable combinations of wavelengths can allow for remote mapping of atmospheric contents by identifying wavelength-dependent changes in the intensity of the returned signal.

Wind turbines extract energy from the wind. In the field of this application it is understood that downstream of a wind turbine there is a wake from the wind turbine, where wind speed is reduced and/or turbulences in the wind can occur. As the flow proceeds downstream, there is a spreading of the wake and the wake recovers towards free stream conditions. The wake effect is the aggregated influence on the energy production of the wind farm, which results from the changes in wind speed caused by the impact of the turbines on each other. It is important to consider wake effects from neighbouring wind farms and the possible impact of wind farms which will be built in the future.

In other words, a wake is the result of the energy extraction of a wind turbine (power converter) and it occurs behind it. In a wake the velocities are reduces and the turbulence intensity is increased. Speaking about (empirical) effects in a wake, one can observe the velocity deficit, the wake decay, the wake redirecting, and the wake meandering.

According to the knowledge of the skilled person the generator torque is computed as a tabulated function of the filtered generator speed, incorporating five control regions: 1, 1 ½, 2, 2 ½, and 3. Region 1 is a control region before cut-in wind speed, where the generator torque is zero and no power is extracted from the wind; instead, the wind is used to accelerate the rotor for start-up. Region 2 is a control region for optimizing power capture, Here, the generator torque is proportional to the square of the filtered generator speed to maintain a constant (optimal) tip-speed ratio. In Region 3, the generator power is held constant so that the generator torque is inversely proportional to the filtered generator speed. Region 1 ½, a start-up region, is a linear transition between Regions 1 and 2. This region is used to place a lower limit on the generator speed to limit the wind turbine's operational speed range. Region 2 ½ is a linear transition between Regions 2 and 3 with a torque slope corresponding to the slope of an induction machine. Region 2 ½ is typically needed (as is the case for my 5-MW turbine) to limit tip speed (and hence noise emissions) at rated power.

In future, wind energy is going to play an important role in global energy production. However, the density of installed wind power will increase in the near future with limited available space in highly windy areas. This leads not only to more wind farms, but also to a dense spacing within the wind farm. An optimization algorithm, which includes the interactions between the wind turbines, can help to find optimal park layouts for a given area. New control concepts can help to increase the total power output of existing and new wind farms by adjusting the wake. The wind speed in the wake of a wind turbine is reduced with respect to the free stream and recovers depending on atmospheric conditions. Additionally, the turbulence in the wake is increased. If a wind turbine is hit by a wake from a wind turbine located upwind, the wind turbine produces less power and is faced higher structural loads because of the increased turbulence.

Quantifying the wake deficit and the increased turbulence in a wake have been of interest for years. Different models have been developed to address the different phenomena - the velocity deficit and the increased turbulence intensity. They differ in complexity and computational effort and vary from pure empirical ones, to data driven models, to modeling the physics within the wake. Often the models are steady state models, which means they describe the interaction in a static manner and no wake and wind propagation is modeled. This is due to the fact that they are mainly used to predict the power output and optimize it with respect to the layout and the site conditions. In the past years, the need of faster wind farm simulation tools is grown because of addressing the described issues in a wind farm. Simulation of flow phenomena in a wind farm on a higher level of fidelity is based on Computational Fluid Dynamics (CFD), most commonly Large Eddy Simulations (LES) are applied. In recent years, researchers have been modeling the Fluid-Structure-Interaction (FSI) by including structural flexibility of the rotor blades and tower. This approach is computationally very expensive, but gives the possibility to simulate the effect of wakes on loads of downstream turbines. In addition, vortex methods based on potential flow theory are applied more and more for wake modeling. This approach has the potential of reducing the computational effort significantly while maintaining sufficient resolution of predominant flow phenomena. Another category in flow interaction models for wind farm simulations are empirical models that are used to describe the different phenomena which occur in a farm. Namely, the ambient wind field and the wake model. In this study, the simulation tool SimWindFarm is used and modified to also describe yaw redirecting. More details about the included models are described in Sec. II.

In relation to wind turbine control, the same two goals are valid for wind farm control: 1) maximization of the total power and 2) reduction of the structural loads. These goals were addressed in research with different approaches: 1) axial induction based wind farm control is proposed and investigated and 2) an approach was introduced to redirects the wake.

Axial induction control aims at manipulating the axial induction by the blade pitch or torque actuator and steering the wind turbine to a lower production level. This results in a weaker wake deficit and aims at minimizing structural load effects on the downwind wind turbines. The effects on the overall energy capture of the wind farm is not clear, yet.

The redirecting approach aims to redirect the wake direction by either individual pitching or by yawing the wind turbine. Therefore, the wake interaction is avoided and the wind turbine downwind can operate in the optimal case in free stream condition. Different investigations have shown that the wake can be redirected up to 0.54 times the rotor diameter by yawing it up to 40deg. Simulation results of using this approach are promising and show an increase in power.

WO 2015/124946 A1 describes a method and system for improving the efficiency of energy capture from an energy capture device by analysis of the downstream fluid wake created by the energy capture device. The system comprises a sensing arrangement configured to acquire air flow data from a downstream wake produced by rotating blades of a wind turbine, the sensing arrangement comprising a Lidar unit having an optical source and a receiver. In use, the sensing arrangement acquires data relating to the air flow velocity in the wake, which data is then processed to determine the relative angle of the wind turbine and the average direction of the incident resource.

P.M.O. Gebraad et al.: "Wind turbine wake estimation and control using FLORIDyn, a control-oriented dynamic wind plant model" (2015 AMERICAN CONTROL CONFERENCE (ACC), 1 July 2015, pages 1702-1708, XP055413503, DOI: 10.1109/ACC.2015.7170978, ISBN: 978-1-4799-8684-2) describes estimation and control results for wind plants, based on FLORIDyn, a novel control-oriented dynamic model for wake interaction effects between wind turbines in a wind plant. The model predicts wake locations, effective flow velocities, and electrical energy production at each turbine as a function of the control degrees of freedom of the turbines. The model includes the dynamic wake propagation effects that cause time delays between control-setting changes and the response of downstream turbines. These delays are a function of the state of the flow field in the wind plant. The model has a state-space structure combined with a nonlinear feedback term. A Kalman filter is developed for the model that corrects the flow field predictions using wind turbine power production measurements. The computational complexity of the model is small enough that it has the potential to be used for optimizing the control reference signals for improved wind plant control, as demonstrated in a case study.

EP 2 767 710 A2 describes a method and system for improving power production efficiency on a wind farm having of a plurality of spatially distributed wind turbines is provided. The method includes receiving a wind measurement that includes a wind direction impinging on a turbine, determining a misalignment of the wind turbine with respect to the wind direction, and activating a wake steering control for the wind turbine to implement the misalignment of the wind turbine with the wind direction such that the misalignment is adapted to steer a wake of the wind turbine away from a neighboring wind turbine. A wind turbine arrangement including a nacelle, a yaw controller, and a yaw drive is also provided.

EP 2 757 255 A1 describes a method of operating a wind farm comprising a plurality of wind turbines, each of the turbines having a plurality of blades, the method comprising determining a possible wake situation at a first wind turbine caused by a second wind turbine, the second wind turbine being located upstream of the first wind turbine, and individually adapting the blades of the second wind turbine such that a wake generated by the second wind turbine is deflected away from the first wind turbine.

In this work, a controller is proposed that assists the wake redirecting approach by steering the wake center with a feedback controller to a desired position. In known work, the optimal yaw angles are computed using a reduced wake model with simplified atmospheric conditions and applied in an open loop framework. However, model uncertainties can yield to undesired behavior. Therefore, only applying the optimized yaw angles does not lead to a robust implementation. Thus, this contribution can be seen as a step toward a realization of a closed-loop wake redirecting.

In particular, the issue to be address by the present invention relates to the manipulation of the wake of a wind turbine by means of yaw control and a measuring means, which measures the wake of the turbine. At the present technological level, this issue is not addressed. Simplified empirical models are developed, which describe the redirection of the wake in dependence of the yaw angle. These angles are then applied in a feedforward control. However, this presents an open-loop system, i.e. there is no feedback via a measuring device.

The aim of the present invention is to increase the total energy yield of a wind park and to minimize the structural load on the turbines in the wake. In particular, a wind turbine in a wake experiences a higher structural load via the interaction with the wake of another wind turbine. The invention achieves these aims by redirecting and manipulating the wake via the measurement of the wake and feeding back of the parameters to the controller. In particular, a measuring device (Lidar-based or similar) on a wind turbine measures the wake of the own turbine and, based on the gathered information, a controller can adjust control variables such that the wake is redirected (is manipulated).

Brief Description of the Invention

An aspect of the invention relates to a control system for a wind turbine including a wake controller for manipulating a wake of wind turbine, wherein the wake controller is adapted to

- obtain at least one wake parameter at one or more predetermined distances downwind of the wind turbine,
- process the at least one wake parameter using at least one corresponding predicted wake parameter;
- compare the at least one processed wake parameter with at least one corresponding desired wake parameter, and
- control, depending on the comparison, a yaw angle of the wind turbine such that the at least one wake parameter is changed.

The at least one wake parameter can be referred to as a wake vector. It is possible that only one wake parameter is provided and used for this application.

Changing the yaw angle of the wind turbine can result in the wake parameter, in particular the position of the wake center being changed. In other words, the wake center can be deflected. Hence, the control system allows to steer the wake center.

In other words, the control system, specifically by using the controller, directly controls the wake position. The procedure may comprise the following steps:

- The remote sensing device may measure in the wake.
- An estimation algorithm may obtain an estimate of wake characteristics including the wake position.
- This estimation may be used in the controller which may obtain gets the desired position from a farm operator/overall planning.
- The controller may set the demanded control action to the turbine based on the estimated position and the desired position.

The lidar enables the estimation of wake characteristics including the wake position and gives insights into the reaction of the flow to any change of the turbine and external conditions.

Advantageously, the method is applied locally on turbine level, so it is a decentralized wind farm control method.

Specifically, a farm operator, or a global farm controller may provide the desired positions to the local controllers.

According to an embodiment as a control parameter, the wake controller provides a demanded yaw angle for aligning the wind turbine.

According to an embodiment iteratively, after applying the demanded yaw angle, the at least one wake parameter is newly obtained, processed and compared.

According to an embodiment the at least one wake parameter comprises the wake center and the at least one desired wake parameter comprises a desired wake center.

According to an embodiment per iteration the wake controller obtains exactly one wake parameter at exactly one predetermined position and wherein the wake controller processes the exactly one wake parameter using exactly one corresponding predicted wake parameter and wherein the controller compares the exactly one processed wake parameter with exactly one desired wake parameter.

According to an embodiment by controlling the yaw angle the wake parameter is changed, preferably the wake center is redirected. In other words, the wake center as a preferred wake parameter can be steered by changing the yaw angle. Ideally the wake center can be steered to be close to or match a desired wake center.

According to an embodiment the control system comprises a Lidar device that faces downwind of the wind turbine.

According to an embodiment the Lidar device is used for obtaining the wake parameter, specifically the wake center at one or more predetermined positions downwind of the wind turbine.

According to an embodiment the Lidar device is used for obtaining the wake parameter at 3 to 15, preferably 4 to 10 more preferably 4 to 6 predetermined positions downwind of the wind turbine.

According to an embodiment the Lidar device is used for obtaining the wake parameter at exactly 1 position downwind of the wind turbine.

According to an embodiment the control system comprises a feedback controller. The feedback controller can be used to stabilize the wake center.

According to an embodiment the feedback controller is a closed loop controller.

According to an embodiment the feedback controller obtains as input parameter a difference between the desired wake parameter and the processed wake parameter.

According to an embodiment processing comprises comparing, specifically subtracting the at least one wake parameter from at least one corresponding predicted wake parameter resulting in at least one subtracted wake parameter, and applying a filter function to the at least one subtracted wake parameter resulting in at least one filtered wake parameter.

According to an embodiment the at least one predicted wake parameter is obtained using a physical model considering a time delay between the position of the wind turbine and the predetermined position(s) at which the at least one wake parameter(s) is/are obtained.

According to an embodiment processing comprises adding at least one immediate predicted wake parameter to the at least one filtered wake parameter, resulting in the at least one processed wake parameter, wherein the at least one immediate predicted wake parameter is obtained using a physical model not considering a time delay between the position of the wind turbine and the predetermined position(s) at which the at least one wake parameter(s) is/are obtained.

According to an embodiment the filter is an adaptive filter to filter uncontrollable frequencies from the at least one subtracted wake parameter.

According to an embodiment the wake propagation from the wind turbine to the measurement location is modeled.

An aspect of the invention relates to a wind turbine including a control system according to the invention, a power generator and a plurality of rotor blades.

An aspect of the invention relates to a wind farm including a plurality of wind turbines.

An aspect of the invention relates to a control method for controlling a wind turbine including the following steps:

- obtaining at least one wake parameter at one or more predetermined distances downwind of the wind turbine,
- processing the at least one wake parameter using at least one corresponding predicted wake parameter;
- comparing the at least one processed wake parameter with at least one corresponding desired wake parameter, and
- controlling, depending on the comparison, a yaw angle of the wind turbine such that the at least one wake parameter is changed.

According to an embodiment the steps are repeatedly carried out.

Advantageously, aspects and/or embodiments of the system and the method described in this application allow:

- Avoiding of partial wake overlaps.
- Increasing total farm power output.
- Decreasing structural loads on downwind turbines.
- Providing a new possibility of the operation of wind farms.

Brief Description of the Figures

**Figure 1** shows the closed-loop system, wherein the wake center position, $y_L$, is estimated from lidar measurement data and compared to the desired wake center $y_{L,des}$. The controller set the yaw input $\gamma_{dem}$ of the wind turbine to steer the wake center to the demanded position.

**Figure 2** shows the wake controller and its paths: the controller C, the internal model $\tilde{\Psi}$, and the filter *F*.

**Figure 3** shows a comparison of two step response simulations with the nominal closed-loop, wherein there is no wake meandering in the first simulation (red) and the nominal system is disturbed by an additional meandering in the second simulation (blue).

**Figure 4** shows a comparison between a simulation where the redirecting controller is off (blue), and a simulation where the wake is redirected (red). The wake center is redirected to the desired value (gray). In the last plot, the power output of turbine 2 is shown. The decrease in power is observed in the case, when the wake hit the second turbine.

**Figure 5** shows the comparison of the total power output of the wind farm of three controller scenarios: the greedy control strategy, where all wind turbines are perfectly aligned with the wind direction (light blue); the presented controller is applied (red), the total power output does not drop when the wakes affect the downwind turbines; and the total power of a simulation is shown in which precomputed static yaw angles are applied (blue), the power output is almost the same than the controlled case.

Detailed Description of the Invention

I. Approach

In this work, a closed-loop controller is introduced that uses the estimation of the wake center to control the wake center position. It proposes a feedback controller to stabilize the wake center at a desired position and aims to compensate uncertainties in the wake model.

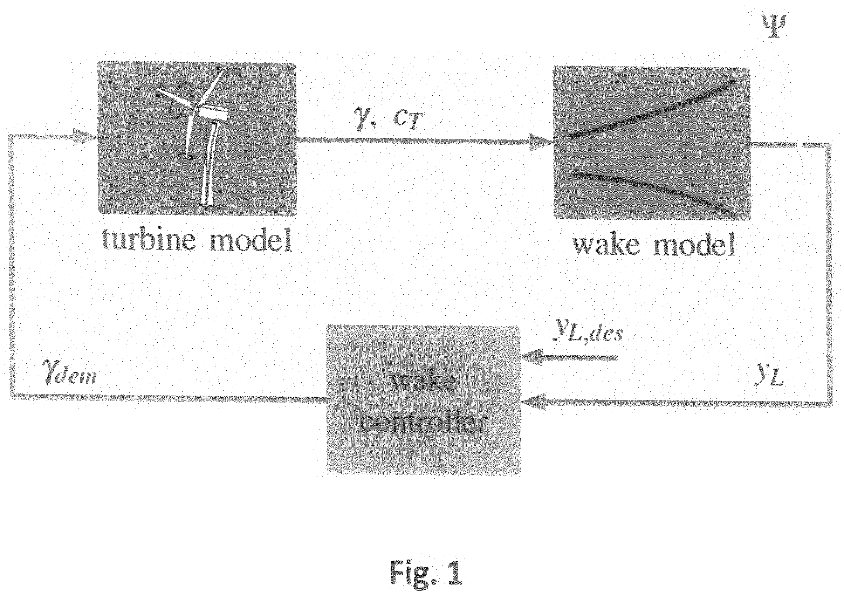

The remote sensing measurement device lidar (Light Detection and Ranging) has been used in wind energy in the past years, mainly for resource assessment. Lately, it has been successfully used for providing wind speed predictions for wind turbine control, e.g. for feed forward control. Placing a lidar on a wind turbine facing downwind the device can be used for tracking the wake and identifying wake parameters. This approach can be used to analyze wake characteristics but also for control purposes. In this work, it is assumed that the wake center can be perfectly estimated. Fig. 1 shows the proposed closed-loop setup. The estimated wake center position from lidar measurement data, $y_L$, is fed back into the controller. The controller sets the demanded yaw input, $\gamma_{dem}$, to control the wake center.

The wake propagation from the wind turbine to the measurement location is modeled with a time delay. The Smith Predictor approach has shown promising results for controlling delayed systems. The basic idea of a Smith Predictor is the concept of internal model control. A model is used to predict the system behavior without delay. The controller gets an immediate feedback through the prediction model. Additionally, the real measured error is fed back. For the design of a wake redirecting controller, the wake model and the yaw actuator model are the important ones, see Fig. 1. They are merged in the system $\Psi$ with the demanded yaw angle, $\gamma_{dem}$, as input and the measured wake center, $y_L$, as output.

II. Modeling - Simulation Model

It is important to have a capable simulation model for testing wind farm controllers. It has to fulfill time efficiency issues as well as describing accurately interaction effects of the wind turbines. Here, an engineering model is used that has already been introduced and is called SimWindFarm (SWF). In the following, submodules of the simulation model and the necessary adjustments are presented.

*A. Turbine Model*

Aero-elastic codes are commonly used to simulate wind turbines for design load calculations. In those simulation codes, the blade element theory is used to calculate the aerodynamic forces effecting the structure. Further, the structure is modeled with different complexity. In SWF, a reduced wind turbine model is used to simulate several wind turbines. A wind turbine is described with multiple degrees of freedom (DOF), e.g. the rotor motion, the fore-aft motion, the drivetrain, the generator, the pitch system and the yaw angle. In the following, the most important dynamics, the rotor motion and the fore-aft motion are briefly described. Further, the new added yaw actuator is presented.

The rotor motion $\Omega$ can be written, using Euler's law for rotational motion, as

$$J\dot{\Omega} = M_a - M_g = \frac{1}{2}\rho\pi R^2 \frac{c_P}{\Omega} v_0^3 - M_g \qquad (1)$$

with $M_a$ and $M_g$ the aerodynamic and generator torque, respectively, $J$ the inertia of all rotational parts, $\rho$ the air density, $R$ the rotor radius, $c_P$ the power coefficient, and $v_0$ the rotor effective wind speed. The fore-aft motion is modeled using a mass-spring-damper system and the aerodynamic thrust force

$$F_a = \frac{1}{2}\rho\pi R^2 c_T v_0^2 \qquad (2)$$

to

$$m\ddot{x}_T = F_a - k_T x_T - d_T \dot{x}_T \qquad (3)$$

with the thrust coefficient $c_T$, effective tower mass $m$, $k_T$ the spring constant and $d_T$ the damping constant. In the aerodynamic coefficients $c_P$ and $c_T$, the power extraction and the aerodynamic interaction are comprised. They depend on the rotor effective wind speed, the rotor motion and the pitch angle.

The term "rotor effective wind speed" is well known to the person skilled in the art. As defined in e.g. "Lidar-Assisted Control Concepts for Wind Turbines" (dissertation of David Schlipf, which is herewith included by reference in its entirety) the rotor effective wind speed is a scalar wind speed causing the same or a comparable dynamic effect for the wind turbine as a non-uniform turbulent wind field (3D vector field defined on the rotor disc). It can be calculated as an average over the rotor disc with or without weighting.

The newly introduced yaw DOF is defined as an relative offset to the wind direction. Its dynamic is modeled with a second order differential equation

$$\ddot{\gamma} + 2D\omega\dot{\gamma} + \omega^2\gamma = \omega^2\gamma_{dem} \qquad (4)$$

with the undamped eigen frequency $\omega$ and the damping $D$.

*B. Turbine Controller*

The implemented wind turbines are classically controlled with a pitch controller and a generator torque controller. There are two different operation regions for the wind turbine controller: In region 2, the primal goal is to produce maximum power. In region 3, maintaining constant rotor speed is the primal goal while extracting constant electrical power. The $k\Omega^2$ control law for the torque controller in region 2 and a gain scheduled PI pitch controller with constant power in region 3 are used.

*C. Wind Field*

In the simulation code, the ambient wind field is generated using spectral relationships between points in the wind field. Both, the longitudinal and transversal wind components are modeled. The Kaimal spectrum is used for calculating the turbulence. Further, the coherence between two turbines is calculated according to known literature. This yields the cross spectrum

$$S_{ik}(f) = C_{ik}(f)\sqrt{S_{ii}(f)S_{kk}(f)}\exp(-j2\pi f\tau_{ik}) \qquad (5)$$

with the coherence $C_{ik}$ between turbine $i$ and $k$, the auto spectra $S_{ii}$ and $S_{kk}$ at turbine $i$ and $k$, respectively, and the time delay $\tau_{ik}$ from turbine $i$ to $k$.

*D. Wake Model*

In the next part, the wake expansion, the wake center, and the wake deficit are briefly described.

1) *Wake Expansion*: According to known literature, the wake expansion diameter at the distance $d$ downwind is given by

$$D_{Wake}(d) = D\left(\beta(c_T)^{\frac{k}{2}} + \alpha\frac{d}{D}\right) \qquad (6)$$

with the parameter $\alpha = 0.5$ and $k = 2$ and the function

$$\beta(c_T) = \frac{1+\sqrt{1-c_T}}{2\sqrt{1-c_T}} \qquad (7)$$

where D is the rotor diameter and $c_T$ is the aerodynamic thrust coefficient.

2) *Wake Center:* The wake center as preferred wake parameter is described by a passive tracer with the time shift according to the mean wind speed, $u_{mean}$. This means, a change in wake properties at time $t_1$ is affecting a downwind turbine at distance $d$ at time

$$t_2 = t_1 + \frac{d}{u_{mean}} \qquad (8)$$

Further, the wake center meanders with the mean lateral wind speed at distance $d$. This yields the wake center $y_{meander}(d)$.

3) *Wake Deficit:* The velocity deficit caused by a wind turbine is one of the main interactive effects between wind turbines. According to known literature, the velocity in the wake at the downwind distance $d$ is given by

$$U(d) \approx \left(1 - \frac{c_T}{2}\frac{D^2}{D_{wake}(d)}\right)U_0 \qquad (9)$$

with the ambient wind speed $U_0$ and the thrust coefficient $c_T$. In oder to combine the wakes of several wind turbines, they are merged with the following rule:

$$c_{n+1} = 1 - \left(\frac{D^2_{wake,n}(d)}{D^2_{wake,n+1}(d)}(1-c_n) + \frac{c_{T,n}D^2(d)}{2D^2_{wake,n+1}(d)}c_n\right) \qquad (10)$$

$$c_{n+1} = \frac{U_{n+1}}{U_0}$$

where $\frac{U_{n+1}}{U_0}$ is the wake deficit at turbine $n + 1$. The indexes denote the properties of the different turbines and their wake. To obtain a more realistic approach with respect to the shape of a wake and partial wake situation, the wake center position is further taken into account to scale the wake deficit. Therefore, Gaussian shape wake deficit is assumed and based on the wake center position the wake deficit is moved.

4) *Wake Deflection:* In order to describe a wake deflection caused by a yaw misalignment $\gamma$, this phenomenon is additionally modeled. The relationship is derived in known literature and was successfully used in an optimization of the yaw angles for a wind farm.

The yaw induced deflection at the downwind position $d$ is according to known literature

$$\delta_{yaw}(d,c_T,\gamma) = -\xi_{init}(c_T,\gamma)\frac{D}{30k_d}\left[15\left(1-\frac{1}{1+\frac{2k_d d}{D}}\right)+\xi_{init}(c_T,\gamma)^2\left(1-\frac{1}{\left(1+\frac{2k_d d}{D}\right)^5}\right)\right] \tag{11}$$

with the initial angle of the wake at the rotor

$$\xi_{init}(c_T,\gamma) = \frac{1}{2}\cos^2(\gamma)\sin(\gamma)c_T \tag{12}$$

and the model parameter $k_d$, which defines the sensitivity of the wake deflection to yaw. The wake model (11) shows the following behavior for the limits of the downwind distance, $d$,

$$d = 0 \Rightarrow \delta_{yaw}(d,c_T,\gamma) = 0 \tag{13}$$

$$d \to \infty \Rightarrow \delta_{yaw}(d,c_T,\gamma) \to -\xi_{init}(c_T,\gamma)D\frac{15+\xi_{init}(c_T,\gamma)^2}{30k_d} \tag{14}$$

Further, a rotational induced wake deflection is modeled according to known literature. At the downwind position $d$ the induced deflection is

$$\delta_{rot}(d) = a_d + b_d d \tag{15}$$

with the empirical coefficients $a_d$ and $b_d$. Thus, at the downwind position $d$ the relative wake center position results to

$$y_{wake}(d) = y_{meander}(d) + \delta_{rot}(d) + \delta_{yaw}(d,c_T,\gamma) \tag{16}$$

*E. Lidar Wake Tracking*

A lidar wake tracking method had already been introduced. Here, perfect wake center estimation is assumed to focus on the controller and evaluate the ability of the control approach. Therefore, it is assumed that the the estimated wake center position, $y_L$, at the downwind distance, $d_{Lidar}$, is the exact wake center position,

$$y_L = y_{wake}(d_{Lidar}) \qquad (17)$$

III. Modeling - Internal Model

The yaw actuator, the wake deflection model and the wake propagation are considered for the internal controller design model. In the following, they are described and the simplifications are highlighted:

The yaw actuator described in (4) is used in the internal model without any modification. The internal model is an example of a physical model for providing the predicted wake parameter.

In the wake deflection model (12) a simplification is made. Here, a constant $c_T = c_{T,const}$ is assumed. This is reasonable since we are focusing on below rated wind speed situations where $c_T$ is almost constant. Further, only (11) is used and the rotational offset (15) is neglected.

Assuming perfect wake center estimation, the wake center, $y_L$, is estimated at the downwind distance, $d_{Lidar}$. Due to the wake propagation, the time delay $\tau$ is introduced and the reaction of the wake center is measured with that delay.

Altogether, this yields a controller design model $\widetilde{\Psi}$ of the system $\Psi$:

$$\widetilde{\Psi} : \begin{cases} \ddot{\gamma} + 2D\omega\dot{\gamma} + \omega^2\gamma = \omega^2\gamma_{dem} \\ \widetilde{y} = \delta_{yaw}(d_{Lidar}, c_{T,const}, \gamma) \\ y_L = \widetilde{y}(t - \tau) \end{cases} \qquad (18)$$

To summarize, the internal model consists of the yaw actuator model, the approximation of the wake deflection and a time delay. A constant thrust coefficient $c_T$ is assumed, the wake deflection due to the rotation is neglected, and there is no model of the wake meandering.

IV. Controller Design

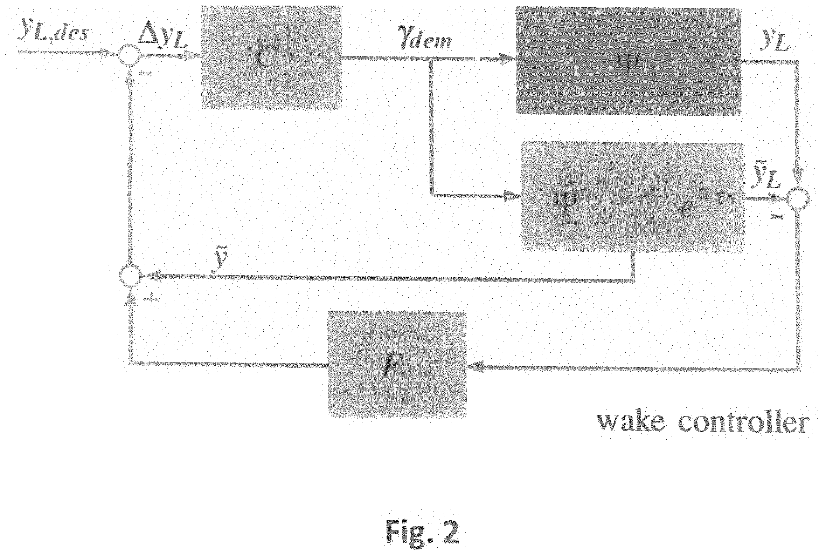

The primal goal of the wake controller is to steer the wake center to a desired point by deflecting the wake in a way such that the wake center is at the desired position. In Section III a reduced model for the controller has been derived. In the following, the proposed control strategy is adapted to the given problem. Figure 2 describes the proposed controller concept and its different parts.

The controller C uses the demanded yaw input to control the measured wake center $y_L$ (being an example of a preferred wake parameter). The internal model $\widetilde{\Psi}$ is used to predict the deflection of the wake center. The measured wake center $y_L$ is compared to the predicted $\widetilde{y}_L$ (being an example of a predicted wake parameter) and filtered with the filter $F$ to remove frequencies that are not controllable. The filtered signal is fed back to the controller as well as the immediate predicted wake center $\widetilde{y}$ (being an example of the immediate predicted wake parameter).

*A. Controller*

The controller C (being an exemplary element of the control system) consists of a proportional-integral (PI) controller and is designed such that it meets the desired closed-loop performance with the dynamic of (18). A phase margin of 60deg and a closed-loop bandwidth of $\omega_{CL} = \dfrac{1}{\tau}$ are set. This yields a controller of the form

$$u = K_p \left( \Delta y_L + \frac{1}{T_i} \int \Delta y_L dt \right) \qquad (19)$$

with the proportional gain $K_p$ and the time constant $T_i$.

Remark: It is important to remark that the designed controller is only able to act on disturbances at frequencies lower than the dead time, the delay of the system. This means that wake meandering effects at high frequencies can not be suppressed with this approach, the static position, however, is controlled. For this reason, an adaptive low pass filter is designed based on the delay t which changes with respect to the wind speed.

*B. Adaptive Filter*

The filter is set up depending on the time delay $\tau$, which depends on the mean wind speed $u_{mean}$. It damps all frequencies which can not be controlled. Therefore, the cutoff frequency is set to $\omega_{filter} = \dfrac{\pi}{8\tilde{\tau}}$ and a second order butterworth low-pass filter is designed.

V. Results

*A. Results using the Controller Design Model*

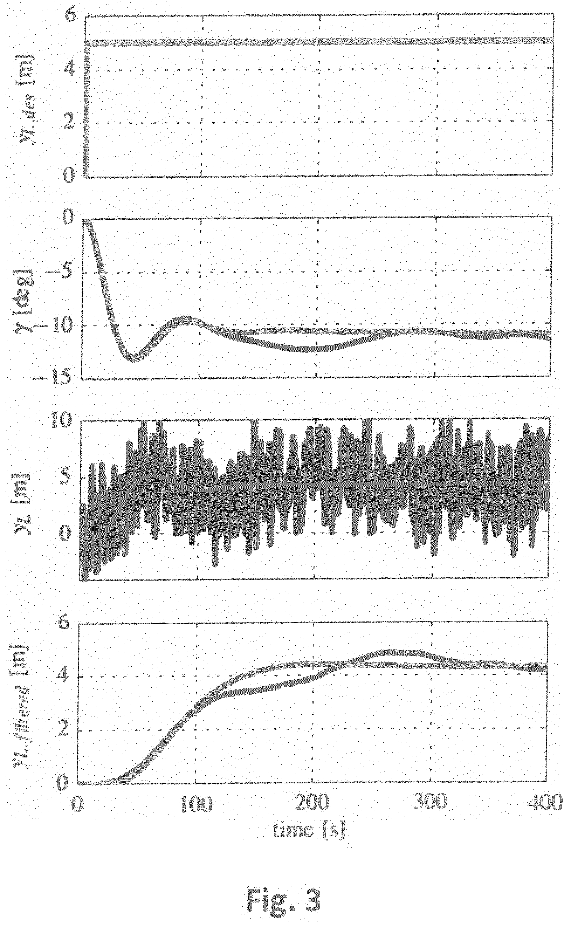

In the following, the closed-loop behavior is analyzed and two step response simulation results are presented. A mean wind speed of 8m/s and a lidar measurement distance of 1D, with $D$ = 126m, is assumed. Thus, the dead time results in $\tau$ = 15.75s. The controller and the filter are set up as previously described. For the first simulation, no wake meandering is assumed. Thus, there is no disturbance acting on the output $y_L$. For the second simulation a wake meandering between $\pm$ 5m is used to disturb the wake center. The results in Fig. 3 show, that the controller setup is able to steer the wake center to the desired position, although the wake center is meandering.

*B. Results using the Simulation Model*

To evaluate the ability of increasing the power output, a 2 × 3 wind farm layout is simulated with 6 NREL 5MW turbines. The downwind spacing is 5D and the lateral spacing 3D. A turbulent wind field of 1000s with a mean wind speed $u_{mean}$ = 8m/s and a rotor effective turbulence intensity of 1% is used. The desired wake positions are approximated using the results of [8].

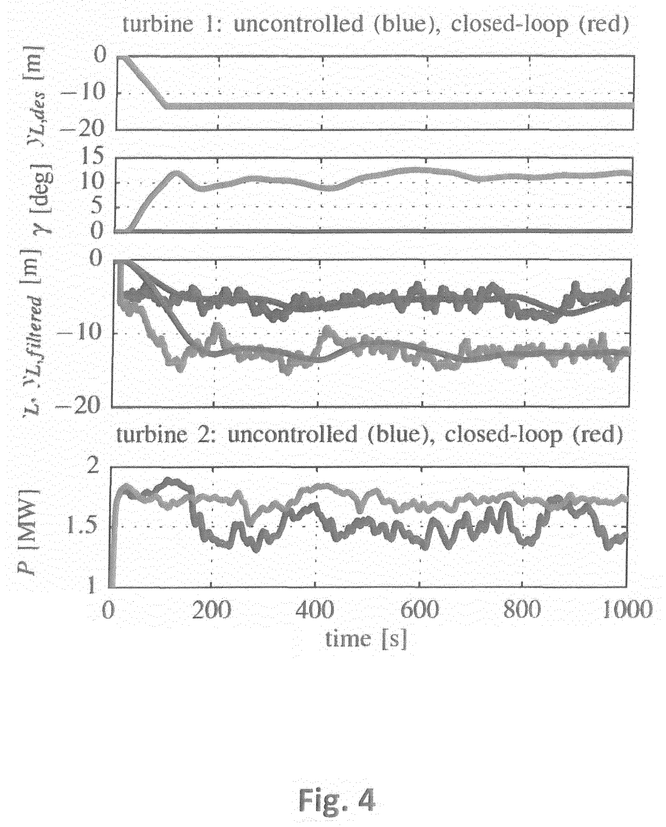

First, in Fig. 4 the functionality of the controller in the simulation environment is verified by analyzing the wake center $y_L$, the filtered wake center $y_{L,filtered}$ (being an example of a filtered wake parameter), wherein the filtered wake center is obtained by applying a filter (function) to $(y_L - \tilde{y}_L)$, the yaw angle $\gamma$ and the power output of the first downwind turbine (turbine 2). The wake center is steered to the desired position. In the power output of turbine 2 at time $\tau \approx$ 180s, the wake of the first turbine is evolved over the total wind domain and the calculations are started. Thus, we see that for the uncontrolled simulation (blue) the power drops. For the controlled simulation the power is nearly kept constant.

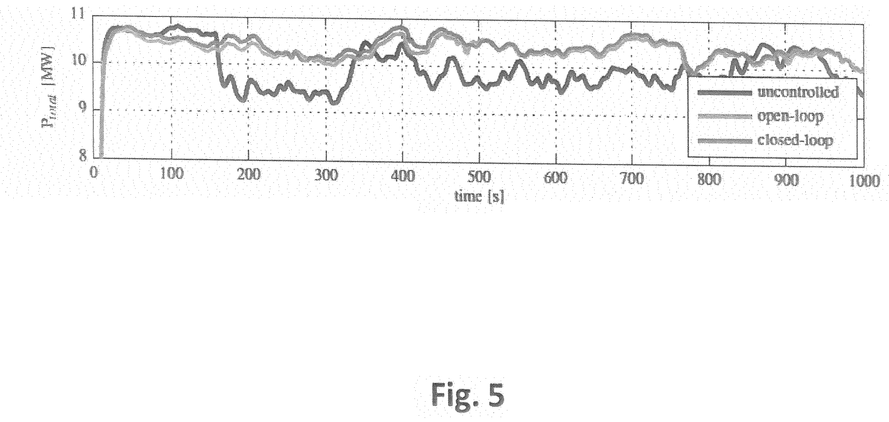

Second, three simulations are carried out to evaluate the closed-loop approach: 1) a simulation without a wind farm control strategy, 2) a simulation, where the static yaw angles are applied in open-loop, and 3) a simulation, where the wakes are controlled in the proposed closed-loop. The total power of the wind farm for the three simulation cases is presented in Fig. 5. The overall power output of the closed-loop controlled wind increased by approximately 4:5%. Compared to the open-loop approach, the total power output is almost the same. However, it has the benefits of a closed-loop controller such as compensate uncertainties in the wake model.

VI. Conclusion

In this contribution a feedback controller is presented to control the wake center of a wind turbine assuming perfect estimation of the wake center. First, the simulation model is described. Then, a reduced controller design model is derived which is used in the controller to predict the wake behavior. This is necessary because the wake propagation to the measurement position of the lidar introduces a time delay. An adaptive filter is designed to remove the uncontrollable frequencies in the wake center dynamics. This is necessary because the wake meandering is disturbing the wake center position and the time delay makes it infeasible to control the meandering. The concept is tested in the wind farm simulation tool SimWindFarm and test simulations with 6 wind turbines in a $2 \times 3$ wind farm layout are performed. Altogether, the approach shows promising results in the simulation by increasing the total power of the wind farm. Together with wake tracking methods, the approach can be considered as a step towards closed-loop wind farm control. In the future, the controller shall be tested in simulation models with higher fidelity. Further, a field testing of wake redirecting is pursued.

**Claims**

1. Control system for a wind turbine including
a wake controller for manipulating a wake of a wind turbine, wherein the wake controller is adapted to

   - obtain at least one wake parameter at one or more predetermined distances downwind of the wind turbine,
   - process the at least one wake parameter using at least one corresponding predicted wake parameter;
   - compare the at least one processed wake parameter with at least one corresponding desired wake parameter, and
   - control, depending on the comparison, a yaw angle of the wind turbine such that the at least one wake parameter is changed.

2. Control system according to claim 1, wherein, as a control parameter, the wake controller provides a demanded yaw angle for aligning the wind turbine.

3. Control system according to one or more of the preceding claims, wherein iteratively, after applying the demanded yaw angle, the at least one wake parameter is newly obtained, processed and compared; and/or
wherein the at least one wake parameter comprises the wake center and the at least one desired wake parameter comprises a desired wake center.

4. Control system according to one or more of the preceding claims, wherein per iteration the wake controller obtains exactly one wake parameter at exactly one predetermined position and wherein the wake controller processes the exactly one wake parameter using exactly one corresponding predicted wake parameter and wherein the controller compares the exactly one processed wake parameter with exactly one desired wake parameter; and/or
wherein by controlling the yaw angle the wake parameter is changed, preferably the wake center is redirected.

5. Control system according to one or more of the preceding claims, wherein the control system comprises a Lidar device that faces downwind of the wind turbine, and, optionally,
wherein the Lidar device is used for obtaining the wake parameter, specifically the wake center at one or more predetermined positions downwind of the wind turbine.

6. Control system according to claim 5, wherein the Lidar device is used for obtaining the wake parameter at 3 to 15, preferably 4 to 10 more preferably 4 to 6 predetermined positions downwind of the wind turbine; or
wherein the Lidar device is used for obtaining the wake parameter at exactly 1 position downwind of the wind turbine.

7. Control system according to one or more of the preceding claims, wherein the control system comprises a feedback controller, and, optionally,
wherein the feedback controller is a closed loop controller.

8. Control system according to claim 7, wherein the feedback controller obtains as input parameter a difference between the desired wake parameter and the processed wake parameter.

9. Control system according to one or more of the preceding claims, wherein processing comprises comparing, specifically subtracting the at least one wake parameter from at least one corresponding predicted wake parameter resulting in at least one subtracted wake parameter, and applying a filter function to the at least one subtracted wake parameter resulting in at least one filtered wake parameter, and, optionally,
wherein the at least one predicted wake parameter is obtained using a physical model considering a time delay between the position of the wind turbine and the predetermined position(s) at which the at least one wake parameter(s) is/are obtained.

10. Control system according to claim 9, wherein processing comprises adding at least one immediate predicted wake parameter to the at least one filtered wake parameter, resulting in the at least one processed wake parameter, wherein the at least one immediate predicted wake parameter is obtained using a physical model not considering a time delay between the position of the wind turbine and the predetermined position(s) at which the at least one wake parameter(s) is/are obtained; and/or

wherein the filter is an adaptive filter to filter uncontrollable frequencies from the at least one subtracted wake parameter.

11. Control system according to one or more of the preceding claims, wherein the wake propagation from the wind turbine to the measurement location is modeled.

12. Wind turbine including a control system according to any of the previous claims, a power generator and a plurality of rotor blades.

13. Wind farm including a plurality of wind turbines according to claim 12.

14. Control method for controlling a wind turbine including the following steps:

- obtaining at least one wake parameter at one or more predetermined distances downwind of the wind turbine,
- processing the at least one wake parameter using at least one corresponding predicted wake parameter;
- comparing the at least one processed wake parameter with at least one corresponding desired wake parameter, and
- controlling, depending on the comparison, a yaw angle of the wind turbine such that the at least one wake parameter is changed.

15. Control method according to claim 14, wherein the steps are repeatedly carried out.

**Patentansprüche**

1. Ein Regelsystem für eine Windturbine mit einem Nachlaufregler zur Beeinflussung des Nachlaufs bzw. der Nachlaufströmung (wake) einer Windturbine, wobei der Nachlaufregler angepasst ist, um Folgendes zu bewerkstelligen:

- Erhalten mindestens eines Nachlaufparameters in einem oder mehreren vorbestimmten Abständen leeseitig der Windturbine,
- Verarbeiten des mindestens einen Nachlaufparameters unter Verwendung mindestens eines entsprechenden vorhergesagten Nachlaufparameters;
- Vergleichen des mindestens einen verarbeiteten Nachlaufparameters mit mindestens einem entsprechenden gewünschten Nachlaufparameter, und
- Regeln, in Abhängigkeit vom Vergleich, eines Gierwinkels der Windturbine, sodass der mindestens eine Nachlaufparameter verändert wird.

2. Das Regelsystem nach Anspruch 1, wobei der Nachlaufregler als Regelparameter einen geforderten Gierwinkel zur Ausrichtung der Windturbine bereitstellt.

3. Das Regelsystem nach einem oder mehreren der vorstehenden Ansprüche, wobei iterativ, nach Anwendung des geforderten Gierwinkels, der mindestens eine Nachlaufparameter neu erhalten, verarbeitet und verglichen wird; und/oder
wobei der mindestens eine Nachlaufparameter das Nachlaufzentrum umfasst und der mindestens eine gewünschte Nachlaufparameter ein gewünschtes Nachlaufzentrum umfasst.

4. Das Regelsystem nach einem oder mehreren der vorstehenden Ansprüche, wobei pro Iteration der Nachlaufregler genau einen Nachlaufparameter an genau einer vorbestimmten Position erhält und wobei der Nachlaufregler den genau einen Nachlaufparameter unter Verwendung genau eines entsprechenden vorhergesagten Nachlaufparameters verarbeitet und wobei die Regelung den genau einen verarbeiteten Nachlaufparameter mit genau einem gewünschten Nachlaufparameter vergleicht; und/oder
wobei, durch Steuerung des Gierwinkels, der Nachlaufparameter geändert wird, wobei vorzugsweise das Nachlaufzentrum umgelenkt wird.

5. Das Regelsystem gemäß einem oder mehreren der vorstehenden Ansprüche, wobei das Regelsystem eine Lidar-Vorrichtung umfasst, die leeseitig der Windturbine gerichtet ist, und, optional,
wobei die Lidar-Vorrichtung verwendet wird, um den Nachlaufparameter zu erhalten, insbesondere das Nachlaufzentrum an einer oder mehreren vorbestimmten Positionen leeseitig der Windturbine.

6. Das Regelsystem nach Anspruch 5, wobei die Lidar-Vorrichtung verwendet wird zum Erhalten des Nachlaufparameters an 3 bis 15, vorzugsweise 4 bis 10, noch bevorzugter 4 bis 6 vorbestimmten Positionen leeseitig der Windturbine; oder
wobei die Lidar-Vorrichtung verwendet wird, um den Nachlaufparameter an genau 1 Position leeseitig der Windturbine zu erhalten.

7. Das Regelsystem nach einem oder mehreren der vorstehenden Ansprüche, wobei das Regelsystem einen Rückführungsregler umfasst, und optional
wobei der Rückführungsregler ein Regler mit geschlossenem Regelkreis ist.

8. Das Regelsystem nach Anspruch 7, wobei der Rückführungsregler als Eingangsparameter eine Differenz zwischen dem gewünschten Nachlaufparameter und dem verarbeiteten Nachlaufparameter erhält.

9. Das Regelsystem nach einem oder mehreren der vorstehenden Ansprüche, wobei das Verarbeiten Folgendes umfasst: das Vergleichen, insbesondere das Subtrahieren des mindestens einen Nachlaufparameters von mindestens einem entsprechenden vorhergesagten Nachlaufparameter, was zu mindestens einem subtrahierten Nachlaufparameter führt, und das Anwenden einer Filterfunktion auf den mindestens einen subtrahierten Nachlaufparameter, was zu mindestens einem gefilterten Nachlaufparameter führt, und, optional,
wobei der mindestens eine vorhergesagte Nachlaufparameter erhalten wird unter Verwendung eines physikalischen Modells, das eine Zeitverzögerung zwischen der Position der Windturbine und der (den) vorbestimmten Position(en), an der (denen) der (die) mindestens eine(n) Nachlaufparameter erhalten wird (werden), berücksichtigt.

10. Das Regelsystem nach Anspruch 9, wobei das Verarbeiten das Hinzufügen mindestens eines unmittelbar vorhergesagten Nachlaufparameters zu dem mindestens einen gefilterten Nachlaufparameter umfasst, was zu dem mindestens einen verarbeiteten Nachlaufparameter führt, wobei der mindestens eine unmittelbar vorhergesagte Nachlaufparameter erhalten wird unter Verwendung eines physikalischen Modells, das eine Zeitverzögerung zwischen der Position der Windturbine und der (den) vorbestimmten Position(en), an der (denen) der (die) mindestens eine(n) Nachlaufparameter erhalten wird (werden), nicht berücksichtigt; und/oder
wobei der Filter ein adaptiver Filter zum Filtern der nicht regelbaren Frequenzen aus dem mindestens einen subtrahierten Nachlaufparameter ist.

11. Das Regelsystem nach einem oder mehreren der vorstehenden Ansprüche, wobei die Ausbreitung der Nachlaufströmung von der Windturbine zum Messort modelliert wird.

12. Eine Windturbine mit einem Regelsystem nach einem oder mehreren der vorstehenden Ansprüche, einem Stromgenerator und mehreren Rotorblättern.

13. Ein Windpark mit einer Mehrzahl von Windturbinen nach Anspruch 12.

14. Ein Regelverfahren zur Regelung einer Windturbine, das folgende Schritte beinhaltet:

    - Erhalten mindestens eines Nachlaufparameters in einem oder mehreren vorbestimmten Abständen leeseitig der Windturbine,
    - Verarbeiten des mindestens einen Nachlaufparameters unter Verwendung mindestens eines entsprechenden vorhergesagten Nachlaufparameters;
    - Vergleichen des mindestens einen verarbeiteten Nachlaufparameters mit mindestens einem entsprechenden gewünschten Nachlaufparameter, und
    - Regeln, in Abhängigkeit vom Vergleich, eines Gierwinkels der Windturbine, sodass der mindestens eine Nachlaufparameter verändert wird.

15. Das Regelverfahren nach Anspruch 14, wobei die Schritte wiederholt ausgeführt werden.

**Revendications**

1. Un système de régulation pour une turbine éolienne incluant :
un régulateur de sillage pour manipuler le sillage (*wake*) d'une éolienne, sachant que le régulateur de sillage est adapté pour :

- obtenir au moins un paramètre de sillage à une ou plusieurs distances prédéterminées en aval de l'éolienne,
- traiter au moins un paramètre de sillage en utilisant au moins un paramètre de sillage prédit correspondant ;
- comparer le au moins un paramètre de sillage traité avec au moins un paramètre de sillage souhaité correspondant, et
- réguler, en fonction de la comparaison, un angle de lacet de l'éolienne de manière à modifier le ou les paramètres de sillage.

2. Le système de régulation d'après la revendication 1, sachant que, en tant que paramètre de régulation, le régulateur de sillage fournit un angle de lacet demandé pour l'alignement de l'éolienne.

3. Le système de régulation d'après une ou plusieurs des revendications précédentes, sachant que, de manière itérative, après avoir appliqué l'angle de lacet demandé, le au moins un paramètre de sillage est nouvellement obtenu, traité et comparé ; et/ou
sachant que le au moins un paramètre de sillage comprend le centre de sillage et que le au moins un paramètre de sillage souhaité comprend un centre de sillage souhaité.

4. Le système de régulation d'après une ou plusieurs des revendications précédentes, sachant que, par itération, le régulateur de sillage obtient exactement un paramètre de sillage à exactement une position prédéterminée et sachant que le régulateur de sillage traite exactement un paramètre de sillage en utilisant exactement un paramètre de sillage prédit correspondant et sachant que le régulateur compare exactement un paramètre de sillage traité avec exactement un paramètre de sillage souhaité; et/ou
sachant que, en régulant l'angle de lacet, le paramètre de sillage est modifié, de préférence le centre de sillage est redirigé.

5. Le système de régulation d'après une ou plusieurs des revendications précédentes, sachant que le système de régulation comprend un dispositif Lidar qui est orienté en aval de l'éolienne, et, facultativement,
sachant que le dispositif Lidar est utilisé pour obtenir le paramètre de sillage, plus précisément le centre de sillage à une ou plusieurs positions prédéterminées en aval de l'éolienne.

6. Le système de régulation d'après la revendication 5, sachant que le dispositif Lidar est utilisé pour obtenir le paramètre de sillage à 3 à 15, de préférence 4 à 10, plus préférablement 4 à 6 positions prédéterminées en aval de l'éolienne ; ou
sachant que le dispositif Lidar est utilisé pour obtenir le paramètre de sillage à exactement 1 position en aval de l'éolienne.

7. Le système de régulation d'après une ou plusieurs des revendications précédentes, sachant que le système de régulation comprend un régulateur à rétroaction, et, facultativement,
sachant que le régulateur à rétroaction est un régulateur en boucle fermée.

8. Le système de régulation d'après la revendication 7, sachant que le régulateur à rétroaction obtient comme paramètre d'entrée une différence entre le paramètre de sillage souhaité et le paramètre de sillage traité.

9. Le système de régulation d'après une ou plusieurs des revendications précédentes, sachant que le fait de traiter comprend le fait de comparer, spécifiquement soustraire le au moins un paramètre de sillage d'au moins un paramètre de sillage prédit correspondant, ce qui résulte en au moins un paramètre de sillage soustrait, et le fait d'appliquer une fonction de filtrage à au moins un ou aux paramètres de sillage soustraits, ce qui résulte en au moins un paramètre de sillage filtré, et, facultativement,
sachant que le au moins un paramètre de sillage prévu est obtenu en utilisant un modèle physique prenant en compte un délai entre la position de la turbine éolienne et la (les) position(s) prédéterminée(s) à laquelle (auxquelles) le au moins un paramètre de sillage est/sont obtenu(s).

10. Le système de régulation d'après la revendication 9, sachant que le fait de traiter comprend le fait d'ajouter au moins un paramètre de sillage prédit immédiat à l'au moins un paramètre de sillage filtré, ce qui résulte en l'au moins un paramètre de sillage traité, sachant que l'au moins un paramètre de sillage prédit immédiat est obtenu en utilisant un modèle physique ne prenant pas en compte un délai entre la position de la turbine éolienne et la ou les positions prédéterminées auxquelles l'au moins un paramètre de sillage est/sont obtenu(s) ; et/ou
sachant que le filtre est un filtre adaptatif pour filtrer les fréquences non régulables à partir d'au moins un paramètre de sillage soustrait.

11. Le système de régulation d'après une ou plusieurs des revendications précédentes, sachant que la propagation de sillage depuis l'éolienne vers le lieu de mesure est modélisée.

12. Une turbine éolienne comprenant un système de régulation d'après l'une des revendications précédentes, un générateur de puissance et une pluralité de pales de rotor.

13. Un parc éolien comprenant une pluralité de turbines éoliennes d'après la revendication 12.

14. Un procédé pour réguler une turbine éolienne comprenant les étapes suivantes :

- obtenir au moins un paramètre de sillage à une ou plusieurs distances prédéterminées en aval de l'éolienne,
- traiter au moins un paramètre de sillage en utilisant au moins un paramètre de sillage prédit correspondant ;
- comparer le au moins un paramètre de sillage traité avec au moins un paramètre de sillage souhaité correspondant, et
- réguler, en fonction de la comparaison, un angle de lacet de l'éolienne de manière à modifier le ou les paramètres de sillage.

15. Le procédé de régulation d'après la revendication 14, sachant que les étapes sont exécutées de façon répétée.

$\gamma, c_T$

$\Psi$

turbine model

wake model

$y_{L,des}$

$y_L$

wake controller

$\gamma_{dem}$

Fig. 1

EP 3 482 067 B1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015124946 A1
- EP 2767710 A2

- EP 2757255 A1

**Non-patent literature cited in the description**

- **P.M.O. GEBRAAD et al.** Wind turbine wake estimation and control using FLORIDyn, a control-oriented dynamic wind plant model. *2015 AMERICAN CONTROL CONFERENCE (ACC),* 01 July 2015, ISBN 978-1-4799-8684-2, 1702-1708